# EUROPÄISCHE PATENTANMELDUNG

(11) **EP 0 593 143 A2**
(43) Veröffentlichungstag der Anmeldung: **20.04.1994**
(21) Anmeldenummer: 93250263.6
(22) Anmeldetag: 28.09.1993
(51) Int. Cl.: B09B 5/00, B03B 9/06, H01J 9/50

(54) **Verfahren zum Recycling von Bildröhren**

(30) Priorität: 12.10.1992 DE 4234706; 29.06.1993 DE 4322385
(71) Anmelder: VICOR GmbH, Video Computer Recycling, D-12459 Berlin (DE)
(72) Erfinder: Schmidtmann, Reinhard, D-10319 Berlin (DE); Glatzel, Hans-Georg, D-12687 Berlin (DE)
(74) Vertreter: Maikowski, Michael, Dipl.-Ing. Dr.

(57) **Zusammenfassung**

Die Erfindung betrifft ein Verfahren zum Recycling von Bildröhren, wobei nach Entspannung der Bildröhre und Entfernung des Halses mit dem Sendesystem die Bildröhre an einer oder mehreren vorbestimmten Stellen durch Wärmeeinwirkung aufgetrennt, der Bildschirm gesäubert, die auf der Innenseite aufgetragenen Beschichtungsmaterialien entfernt und die erhaltenen Glasteile unterschiedlicher Zusammensetzung getrennt einem Wiederverwertungsprozeß zugeführt werden.

Die Vorrichtung zur Durchführung des Verfahrens besteht aus einem getakteten Automaten. Der Automat weist in Abständen angeordnete Haltevorrichtungen für die zu bearbeitenden Bildröhren auf. Die Haltevorrichtungen werden an einzelnen Bearbeitungspositionen (4,5,7,8,9) nacheinander vorbeigeführt, bei der die Bildröhre durch Einritzen (4) und Wärmezufuhr (5) eine Oberflächenstörung erhält, an der dann ein Platzen der Bildröhre erfolgt. Nach Abheben des Konusteiles werden die Beschichtungsmaterialien aus dem Bildschirm entfernt (8).

Durch die Trennung in Konus und Bildschirm ist eine sinnvolle Wiederverwendung der Gläser, die eine unterschiedliche Zusammensetzung aufweisen, möglich. Ebenso können die ausgetragenen Beschichtungsmaterialien wiederverwendet werden.

## Beschreibung

Die Erfindung betrifft ein Verfahren zum Recycling von Bildröhren nach dem Oberbegriff des Anspruchs 1 und eine Vorrichtung zur Durchführung des Verfahrens.

Es fallen täglich eine große Anzahl von Bildröhren aus alten Fernsehgeräten und Computermonitoren an, die durch Ausschuß bei der Herstellung von Bildröhren noch vergrößert wird. Bei der Deponierung dieser großen Mengen an Bildröhren stellen insbesondere die in den Beschichtungen der Bildröhren enthaltenen Schadstoffe eine akute Gefährdung der Umwelt dar.

Bekannte Verfahren zum Recycling von Bildröhren zerkleinern die Bildröhren zur Verringerung ihres Volumens und bemühen sich um ein Abtrennen bzw. partielles Abtrennen der Beschichtungsmaterialien von den Glasteilen.

Nach einem bekannten Verfahren werden nach der Zerkleinerung der kompletten, belüfteten Bildröhre die im Glasbruch befindlichen metallhaltigen Teile auf einer Förderstrecke abgeschieden. Die Reinigung der beschichteten Glasbruchstücke erfolgt im Chargenbetrieb in einer Spezialwascheinheit.

Es handelt sich dabei um einen rein mechanisch-physikalischen Prozeßablauf unter Einsatz von Prozeßwasser. Nach der Reinigung durchläuft das Glas mehrere Trennstufen, in denen das gereinigte Glas von anhaftendem Feinschlamm und Prozeßwasser getrennt wird.

Nachteilig an diesem Verfahren ist es, daß die in die Flüssigkeit überführten Beschichtungsmaterialien nicht vollständig aus dieser entfernt werden können. Dem bekannten Naßverfahren zum Recycling von Bildröhren gelingt es nicht, eine Trennung der unterschiedlichen Glassorten der Bildröhren vorzunehmen. Die aus dem Wasser abgeschiedenen Beschichtungsmaterialien fallen als Schlamm an und müssen als Sonderabfall entsorgt werden. Eine Verwendung des anfallenden und nicht sortierten Glasbruches ist nur bedingt möglich.

Weiterhin ist eine Vorrichtung bekannt, mit der es möglich ist, mittels eines einfachen Preßvorgangs die beiden fest miteinander verbundenen Glasteile von Bildröhren, nämlich den Trichterhalsteil und den Bildschirmglasteil, selektiv voneinander zu treffen, wobei der Trichterhalsglasteil in kleinere Bruchstücke zerkleinert wird, der Bildschirmglasteil dagegen unversehrt erhalten bleibt.

Die selektive Zerkleinerung der Bildröhren erfolgt mit einer hydraulischen Presse, die aus einer mit einem Hydraulikzylinder verbundenen, beweglichen Druckplatte und unterhalb der Druckplatte angeordneten feststehenden Bodenplatte besteht.

Das Recycling von Bildröhren mit dieser Vorrichtung ist arbeitsintensiv.

Weiterhin ist es bekannt, zur Wiederverwendung von Bildröhren diese in Konus und Bildschirmteil zu trennen. Die Trennung erfolgt mittels Trennscheibe. Das Trennen mit dieser Methode ist lärmbelästigend, und durch den anfallenden Glasstaub sind aufwendige Schutzmaßnahmen notwendig.

Zur Trennung von Konus und Bildschirm von Bildröhren ist es auch bekannt, die Verschmelzungsstelle dieser beiden Teile durch chemische Verfahren zu lösen. Dazu werden konzentrierte Säuren eingesetzt. Auch diese Verfahren benötigen einen hohen Aufwand an Sicherheitsmaßnahmen und sind für einen kontinuierlichen Betrieb mit hohen Durchsatzleistungen nicht geeignet.

Nach den bisher bekannten Verfahren werden die belüfteten Bildröhren mit demontiertem Strahlersystem und entferntem Implosionsschutz dem Recyclingprozeß zugeführt. Die Entfernung des Implosionsschutzes ist notwendig, da er zumeist die Nahtstelle zwischen den unterschiedlichen Glassorten überdeckt.

Der Erfindung liegt die Aufgabe zugrunde, ein Verfahren und eine Vorrichtung zum Recycling von Bildröhren und deren Bruch derart zu schaffen, daß die einzelnen Bestandteile der Bildröhren im wesentlichen voneinander getrennt anfallen und einer Wiederverwendung zugeführt werden können.

Erfindungsgemäß wird diese Aufgabe dadurch gelöst, daß an den belüfteten Bildröhren mit demontiertem oder noch vorhandenem Strahlersystem an einer oder mehreren vorbestimmten Stellen zuerst eine Oberflächenstörung vorgenommen wird und anschließend die Auftrennung durch Wärmeeinwirkung erfolgt, wobei die Wärmezufuhr mit einem mit einer Spanneinrichtung versehenen, an der Bildröhre anliegenden, stromdurchflossenen Metalldraht oder Metallband erfolgt. Anschließend wird der Bildschirm in bekannter Weise gesäubert, die auf der Innenseite aufgetragenen Beschichtungsmaterialien entfernt und die erhaltenen Glasteile unterschiedlicher Zusammensetzung fraktioniert entsorgt.

Beim Auftrennen der Bildröhren in Konus und Schirmteil treten durch vorhandene oder durch bei der Bearbeitung zum Auftrennen der Bildröhre entstehende mechanische Spannungen häufig Sprünge im Glas des Schirmteiles auf. Die Sprünge führen zum nicht gewollten Zerspringen des Schirmteiles in kleine Einzelteile während der Bearbeitung in den Entsorgungsanlagen und damit zu Störungen im Prozeßablauf.

Der Prozeßablauf wird unterbrochen; die Glasscherben müssen von Hand entfernt werden. Eine Entfernung des Beschichtungsmaterials vom Glasbruch der Schirmteile in einem Trockenverfahren ist kaum zu realisieren.

Vorteilhafterweise wird deshalb vor dem Durchlauf der Bildröhre durch die einzelnen Bearbeitungsstationen für das Recycling um den Schirmteil der Bildröhre eine Schutzanordnung gelegt.

Die Schutzanordnung besteht aus an den Seiten oder Ecken des Schirmteiles angreifenden Druckelementen. Der notwendige Druck auf die Druckelemente wird pneumatisch oder mit einer anderen an sich bekannten Möglichkeit übertragen.

Eine andere Variante der Schutzanordnung besteht aus einem Spannband, in das Druckelemente integriert sind. Das Spannband liegt am Schirmteil der Bildröhre an.

Die Druckelemente werden an allen vier Ecken oder auf allen vier Seiten des Schrimteiles aufgesetzt. Von besonderem Vorteil ist es, für die Druckelemente elastisches Material einzusetzen. Werden die Druckelemente an den Ecken des Bildschirmes angesetzt, kommen vorgeformte abgewinkelte Druckelemente zum Einsatz, um ein gutes Umschließen der Ecken des Schirmteiles zu erreichen.

Durch die vorteilhafte Ausgestaltung der erfindungsgemäßen Lösung wird erreicht, daß ein Zerbrechen des Schirmteiles in Bruchstücke während des Recyclingprozesses, vorzugsweise beim Abtrennen des Schirmteiles vom Konus der Bildröhre weitgehend ausgeschlossen wird. Die erfindungsgemäße Lehre ermöglicht es, den Schirmteil, selbst wenn er während des Durchlaufs durch den Recyclingprozeß springt, als Ganzes in den folgenden Bearbeitungsstufen zu erhalten.

Es wird eine vollständige Ablösung der Beschichtungsmaterialien vom Glas der Bildröhren, eine Trennung von Beschichtungsmaterial und Glas sowie eine weitgehende Trennung der einzelnen Glassorten voneinander erreicht. Dadurch stehen die genannten Teile und Stoffe für eine Wiederverwertung im Stoffkreislauf zur Verfügung.

Werden die aufzubereitenden Bildröhren als Altaggregate angeliefert, erfolgt vor der eigentlichen Aufbereitung der Bildröhren eine Vordemontage in Gehäuse, Bildröhre und Chassis, Leiterplatten und Verkabelung. Hieran anschließend erfolgt die eigentliche Aufbereitung der Bildröhre.

Die Bildröhre wird belüftet, danach der Hals mit dem Strahlersystem und der Implosionsschutz entfernt. Die so vorbereitete Bildröhre wird auf einen Arbeitstisch aufgesetzt, durch eine Halterung arretiert und danach einer Justiervorrichtung zugeführt. In der Justiervorrichtung wird die richtige Höhe des Arbeitstisches und die waagerechte Ausrichtung der Bildröhre für die weitere Bearbeitung eingestellt. Eine Justierung ist notwendig, da die Abmessungen der zu bearbeitenden Bildröhren stark voneinander abweichen.

In einer vorzugsweisen Ausgestaltung der Erfindung wird die vorbereitete Bildröhre nach dem Aufsetzen auf den Arbeitstisch mit einer Schutzanordnung versehen, die ein ungewolltes Zerspringen des Bildschirmteiles beim nachfolgenden Bearbeiten verhindert.

Die Schutzanordnung greift so an den Bildschirm von außen an, daß die obere Kante der Schutzanordnung maximal bis an die gewünschte Auftrennlinie reicht. Als Trennlinie wird üblicherweise die Nahtstelle zwischen dem aus unterschiedlichen Glassorten bestehenen Schirmteil und Konus genutzt. Vorzugsweise überdecken die Druckelemente der Schutzanordnung die gesamte Höhe des Schirmteiles.

Nach Justierung der Bildröhre wird an einer oder mehreren vorbestimmten Stellen längs ihres Umfanges eine Oberflächenstörung erzeugt. Diese Oberflächenstörung erfolgt beispielsweise durch eine Ritzvorrichtung und wird vorzugsweise an oder nahe den Nahtstellen unterschiedlicher Glassorten vorgenommen. An der Stelle der vorgenommenen Oberflächenstörung wird nachfolgend eine Erwärmung der Bildröhre auf Temperaturen höher als 50° C vorgenommen. Aufgrund der vorhandenen Oberflächenstörung, der nachfolgenden Wärmeeinwirkung und der dann folgenden Abkühlung werden mechanische Spannungen erzeugt, die ein Platzen des Bildschirmes bevorzugt an diesen Stellen hervorrufen. Durch diese Verfahrensweise läßt sich eine weitgehende Trennung der unterschiedlichen Glassorten erreichen.

Die Wärmezufuhr erfolgt erfindungsgemäß durch ein schmales elektrisch beheiztes Metallband oder einen Metalldraht. Metallband oder Metalldraht können auch als Rohrleitungen ausgebildet sein, um zum schnellen Kühlen Kühlmittel durchleiten zu können. Die Anwendung eines Metallbandes bringt den Vorteil, daß nur ein schmaler umlaufender Bereich des Bildschirmes erwärmt wird.

Da die zu bearbeitenden Bildröhren unterschiedliche Größen aufweisen und die Metallbänder sich bei der Erwärmung der Bildröhre ausdehnen, muß für eine Nachspannung gesorgt werden. Nur eine einwandfreie Anlage der Metallbänder erlaubt eine verlustfreie Aufheizung. Das automatische Nachspannen der metallischen Heizbänder kann über eine Feder, besser über eine Rutschkupplung erfolgen.

Nach dieser Wärme-Kältebehandlung zerspringt die Bildröhre in die einzelnen Bildröhrenteile, z. B. Konus und Bildschirm, die getrennt weiter aufgearbeitet werden. Der Konus wird mechanisch zerkleinert und einer Sammelstelle zugeführt.

Die sich durch den Trennvorgang im Bildschirm angesammelten losen Teile, wie Glassplitter und Beschichtungsmaterial, werden abgesaugt und aus der Abluft in einem Filter separiert.

Werden Farbbildröhren recyclt, so werden vor dem Absaugen der losen Teile die in der Bildröhre vorhandenen Masken ausgeknöpft und entnommen.

In einem nächsten Arbeitsgang werden die auf dem Bildschirm aufgedampften Beschichtungsmaterialien entfernt. Die Entfernung kann sowohl in einem Naßverfahren als auch in einem Trockenverfahren erfolgen.

Die Beschichtungsmaterialien werden vorzugsweise mechanisch gelockert. Es sind andere Möglichkeiten der Lockerung der Beschichtungsmaterialien, z.B. durch Lösungsmittel einsetzbar. Zur mechanischen Lockerung sind die dafür bekannten Verfahren einsetzbar. Als solche sind Bürsten, Schwabbeln, Blasen, Kratzen, Schaben und ähnliches hinlänglich bekannt. Gleichzeitig mit der Lockerung kann die Entfernung der gelösten Beschichtungsmaterialien erfolgen. Es ist auch möglich, zuerst die Lockerung zu beenden und dann die Entfernung der Beschichtungsmaterialien zu beginnen. Ebenso ist denkbar, daß die Beschichtungsmaterialien entsprechend einer vorgegebenen Gemometrie entfernt werden.

Bei Trockenverfahren werden die Partikel abgesaugt und anschließend aus der Abluft in einem Filter abgeschieden. Bei Naßverfahren werden die Partikel in einem Lösungsmittel aufgeschlämmt bzw. gelöst und ausgetragen.

Der so gereinigte Bildschirm wird aus der Anlage ausgefahren und nach Zerkleinerung einer sinnvollen Wiederverwendung zugeführt.

Wird eine Schutzanordnung verwandt, so wird am Ende der Bearbeitungsstufen der Druck auf die Druckelemente aufgehoben und die Schutzanordnung vom Schirmteil entfernt. Erst jetzt kann der Schirmteil, sollten während der Bearbeitungsprozesse Risse aufgetreten sein, in einzelne Bruchstücke zerfallen.

Die Trennung der Glassorten unterschiedlicher Zusammensetzung nach dem erfindungsgemäßen Verfahren läßt eine sinnvolle Wiederverwendung zu.

Die Vorrichtung zur Durchführung des Verfahrens besteht aus einem getakteten Automaten, bei dem die einzelnen Bearbeitungsstationen im wesentlichen kreisförmig angeordnet sind.

Neben der kreisförmigen Ausführung können in einer anderen Ausführungsform die einzelnen Arbeitsstationen auch linear angeordnet werden. Auch Varianten zwischen den beiden vorgenannten Ausführungsformen sind denkbar.

Die Vorrichtung zur Durchführung des Verfahrens weist in Abständen Arbeitstische mit Haltevorrichtungen für die zu bearbeitenden Bildröhren auf. Diese Haltevorrichtungen werden an ortsfest angeordneten Arbeitsstationen vorbeigeführt. Nach einer anderen Variante werden die einzelnen Arbeitsstationen an der ortsfest angeordneten Haltevorrichtung für die Bildröhren getaktet vorbeigeführt.

Als eine Arbeitsstation ist eine Justiervorrichtung für die richtige Höhe der Arbeitstische mit der Haltevorrichtung für die Bildröhren vorgesehen. Je nach Größe der Bildröhre und z. B. der Lage der Nahtstelle zwischen zwei unterschiedlichen Glassorten wird die Haltevorrichtung auf eine vorbestimmte Höhe für die nachfolgenden Arbeitsstationen justiert.

Als weitere Arbeitsstationen folgen der Justiervorrichtung eine Vorrichtung zur Herbeiführung der Oberflächenstörung im Glas der Bildröhre, eine Vorrichtung zur Wärmezufuhr, eine Vorrichtung zum Weitertransport der einzelnen nach der Auftrennung erhaltenen Bildschirmteile, Absaugvorrichtungen und eine Vorrichtung zum Lockern der aufgetragenen Beschichtungsmaterialien.

Wird mit einer Schutzanordnung, die das Zerspringen des Bildschirmteiles während der Bearbeitung verhindert, gearbeitet, ist der Justiervorrichtung eine Vorrichtung zum Anlegen der Schutzanordnung vorgeschaltet.

Die Erfindung soll nachfolgend schematisch anhand der Zeichnungen beispielsweise näher erläutert werden.

Es zeigen:

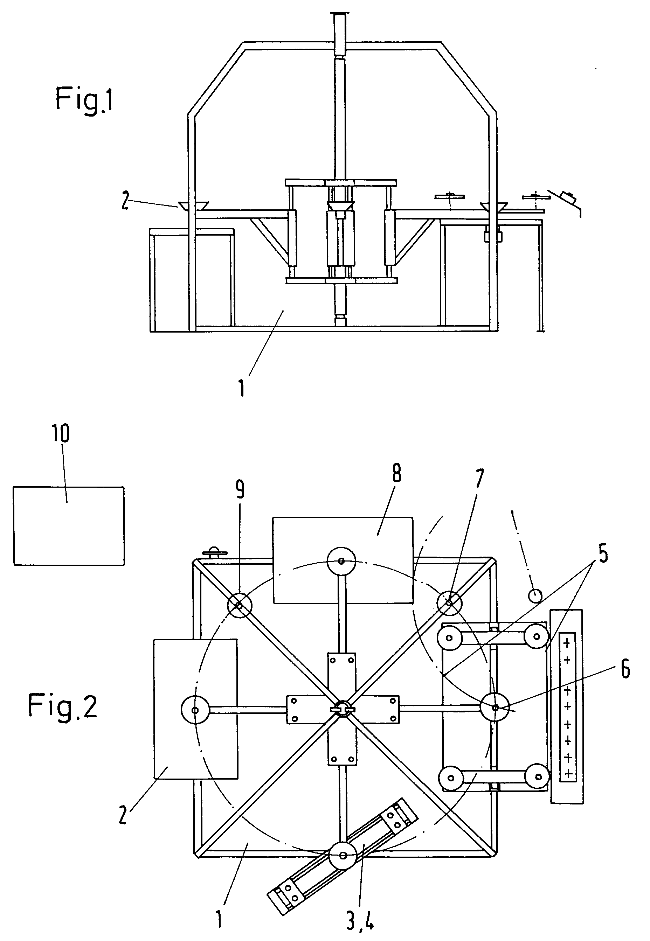

- Fig. 1: die Anlage in der Seitenansicht
- Fig. 2: die Anlage in der Draufsicht
- Fig. 3: die Schutzanordnung mit Druckelementen
- Fig. 4: die Schutzanordnung als Spannband.

Die Anlage besteht aus einem getakteten Automaten 1 mit kreisförmigem Querschnitt, der am Außenrand in Abständen Arbeitstische 2 mit Haltevorrichtungen für die Aufnahme der Bildröhren aufweist. Die Bildröhren werden auf dem Arbeitstisch durch eine Saugvorrichtung und zusätzlich an den Ecken durch eine Klemmeinheit gehalten. Die so gehaltenen Bildröhren werden auf dem Arbeitstisch 2 einer Justiervorrichtung 3 zugeführt. Hier erfolgt sowohl eine durch die unterschiedliche Bildröhrengröße notwendige Ausrichtung der Bildröhre in der Höhe durch Anheben oder Absenken des Arbeitstisches als auch in der Waagerechten durch das Zusammenspiel eines Manipulators mit den Klemmeinheiten in Hinsicht auf die nachfolgenden Bearbeitungsstationen.

Die justierte Bildröhre gelangt dann zur Bearbeitungsstation 4 . In dieser Station ist eine um die Bildröhre umlaufende Ritzvorrichtung angeordnet. Die Ritzvorrichtung schneidet eine Kerbe in den Bildschirm und sorgt so für eine Oberflächenstörung an der für die waagerechte Auftrennung der Bildröhre vorgesehenen Linie. In der Bearbeitungsstation 5 ist ein schmales Heizband vorgesehen, das an die Bildröhre auf die vorher eingebrachte Einkerbung unter Spannung angelegt wird. Zur Aufrechterhaltung der Bandspannung ist eine Rutschkupplung an der Vorrichtung mit dem Heizband vorgesehen. Das Heizband wird auf eine Temperatur von 120° C bis 150° C über eine Zeitdauer von 10 sec bis 3 min. erwärmt und anschließend abgekühlt. Dabei wirkt das anliegende Heizband jetzt als zusätzliches Kühlmedium. Die Erzeugung gezielter mechanischer Spannungen im Glas läßt die Bildröhre an der geschwächten Stelle platzen.

Die so erhaltenen Teile der Bildröhre, nämlich Konus und Bildschirm, werden jetzt separat weiter aufbereitet. Der Konus der Bildröhre wird mit einer Transporteinrichtung 6, die aus einer in das Loch des abgesprengten Bildschirmhalses einführbare, nach dem Regenschirmprinzip arbeitende Anordnung besteht, vom Bildschirm abgehoben und aus dem Kreislauf ausgeschleust.

In der Arbeitsstation 7 sind Sauger angeordnet, die die im Bildschirm vorhandenen losen Teile, z. B. Glassplitter, absaugen.

Die Arbeitsstation 8 weist mehrere an einem Gestell angeordnete rotierende Bürsten auf. Die Bürsten werden in den offenen Bildschirm eingeführt und lockern bei ihrer Rotationsbewegung das Beschichtungsmaterial von der Glasfläche. Nach mehrmaligem Hin- und Herführen des Bürstengestelles sind die Beschichtungsmaterialien vom Glas vollständig abgetrennt und werden in der nachfolgenden Station 9, in der eine Absaugvorrichtung angeordnet ist, abgeführt. Die abgesaugten Stäube werden in Filtern gesammelt.

Der so behandelte Bildschirm ist frei von die Umwelt belastenden Produkten und wird in Station 10 aus dem Kreislauf ausgetragen und nach Zerkleinerung wieder der Glasherstellung zugeführt.

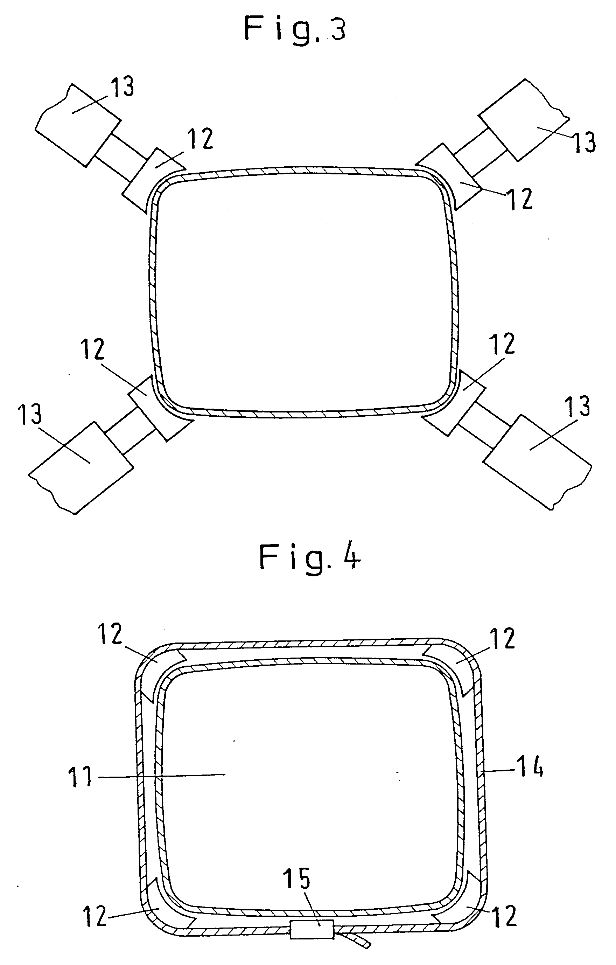

In einer vorteilhaften Ausgestaltung der Erfindung umgreifen gemaß Fig. 3 die Druckelemente 12 der Schutzanordnung 13 die Ecken des Schirmteiles 11 der Bildröhre. Durch eine nicht dargestellte Vorrichtung werden die Druckelemente 12 fest an den Schirmteil 11, z. B. pneumatisch, angepreßt.

Das Anbringen der Schutzanordnung erfolgt sofort nach Aufsetzen der Bildröhre auf den Arbeitstisch 2. Die Bildröhre mit der Schutzanordnung 13, die erst am Ende des Recyclingprozesses entfernt wird, durchläuft den gesamten Recyclingprozeß.

Die in Fig. 4 gezeigte Schutzanordnung besteht aus einem Spannband 14. In das Spannband 14 sind die Druckelemente 12 integriert. Das feste Andrücken der Druckelemente 12 im Spannband 14 auf den Schirmteil 11 der Bildröhre erfolgt durch eine Spannvorrichtung 15. Die Spannvorrichtung 15 wird beispielsweise durch einen Bajonettverschluß gebildet.

## Patentansprüche

1. Verfahren zum Recycling belüfteter Bildröhren, bei dem
a) die Bildröhre an einer oder mehreren vorbestimmten Stellen aufgetrennt,
b) der Bildschirm gesäubert,
c) die auf dessen Innenseite aufgetragenen Stoffe entfernt und
d) die erhaltenen Glasteile unterschiedlicher Zusammensetzung getrennt werden,
**dadurch gekennzeichnet, daß**
im Verfahrensschritt a) an der oder den vorbestimmten Stellen zuerst eine Oberflächenstörung vorgenommen wird und anschließend die Auftrennung durch Wärmeeinwirkung erfolgt, wobei die Wärmezufuhr mit einem mit einer Spanneinrichtung versehenen, an der Bildröhre anliegenden, stromdurchflossenen Metalldraht oder Metallband erfolgt.

2. Verfahren nach Anspruch 1, **dadurch gekennzeichnet, daß** vor dem Durchlauf der Bildröhre durch die Bearbeitungsstationen der Schirmteil mit einer Schutzanordnung gegen Zerspringen in Einzelteile versehen wird.

3. Vorrichtung zur Durchführung des Verfahrens nach mindestens einem der Ansprüche 1 und 2, **dadurch gekennzeichnet, daß** an einem getakteten Automaten in Abständen Arbeitstische mit Haltevorrichtungen für die zu bearbeitenden Bildröhren angebracht sind und entsprechend den einzelnen Positionen des getakteten Automaten hintereinander ortsfest angeordnet sind:
- eine Justiervorrichtung, für die richtige Höhe der Arbeitstische,
- eine Ritzvorrichtung, die ein um die Bildröhre umlaufendes Schneidmesser aufweist,
- eine Vorrichtung zur Wärmeeinwirkung, die aus einem elektrisch erwärmten Heizband besteht, für dessen feste Anlage auf der Bildröhre eine Spannvorrichtung zur Spannung des Heizbandes vorgesehen ist,
- Einheiten für den separaten Transport der einzelnen Bildröhrenteile, wobei die Transporteinrichtung für den abgetrennten Konus aus einer in das Loch des abgesprengten Bildschirmhalses einführbaren, nach dem Regenschirmprinzip arbeitenden Anordnung besteht,
- eine Reinigungseinheit für die Bildschirme, die aus einer den gesamten Bildschirm nach einem vorgewählten Programm überfahrbaren mit einer Schlitzdüse ausgerüsteten Absaugvorrichtung besteht,
- eine Einheit zur Lockerung der auf dem Bildschirm aufgetragenen Beschichtungsmaterialien, die aus einer oder mehreren rotierenden Bürste(n) besteht,
- eine weitere wie vorher beschriebene Absaugvorrichtung zur Absaugung der auf dem Bildschirm aufgetragenen jetzt gelockerten Beschichtungsmaterialien
- und eine Vorrichtung zum Abführen der bearbeiteten Bildschirme.

4. Vorrichtung nach Anspruch 3, **dadurch gekennzeichnet, daß** der getaktete Automat in der Draufsicht im wesentlichen kreisförmig ist und entsprechend die einzelnen Bearbeitungsstationen im wesentlichen entlang eines Kreises angeordnet sind.

5. Vorrichtung nach Anspruch 3, **dadurch gekennzeichnet, daß** der getaktete Automat in der Draufsicht im wesentlichen länglich ist und dementsprechend die einzelnen Bearbeitungsstationen im wesentlichen entlang einer Geraden angeordnet sind.

6. Vorrichtung zur Durchführung des Verfahrens nach den Ansprüchen 1 und 2, **dadurch gekennzeichnet, daß** die Schutzanordnung (13) aus die Ecken des Schirmteiles (11) einer Bildröhre oder aus an den Seiten des Schirmteiles (11) einer Bildröhre angreifenden Druckelementen (12) besteht.

7. Vorrichtung nach Anspruch 6, **dadurch gekennzeichnet, daß** die Kraftübertragung auf die Druckelemente (12) pneumatisch, mechanisch oder auf jede andere Art erfolgt.

8. Vorrichtung zur Durchführung des Verfahrens nach den Ansprüchen 1 und 2, **dadurch gekennzeichnet, daß** die Schutzanordnung aus einem Spannband (14) mit eingefügten Druckelementen (12) besteht.

9. Vorrichtung nach mindestens einem der Ansprüche 6 bis 8, **dadurch gekennzeichnet, daß** mindestens zwei, vorzugsweise vier Druckelemente (12), in einer Schutzanordnung vorgesehen sind.

10. Vorrichtung nach mindestens einem der Ansprüche 6 bis 9, **dadurch gekennzeichnet, daß** die Druckelemente (12) aus elastischem Material bestehen.
